Europäisches Patentamt

European Patent Office

Office européen des brevets

(11) Publication number: **0 093 460**
**B1**

## (12) EUROPEAN PATENT SPECIFICATION

(45) Date of publication of patent specification: **12.08.87**

(21) Application number: **83200378.4**

(22) Date of filing: **21.03.83**

(51) Int. Cl.⁴: **G 02 B 6/28, C 03 B 37/14**

(54) Method of manufacturing a fibre-optical coupling element.

(43) Date of publication of application:
**09.11.83 Bulletin 83/45**

(45) Publication of the grant of the patent:
**12.08.87 Bulletin 87/33**

(84) Designated Contracting States:
**BE DE FR GB NL SE**

(56) References cited:
**GB-A-2 030 318**
**US-A-3 860 405**
**US-A-4 011 007**
**US-A-4 054 366**

**PATENTS ABSTRACTS OF JAPAN, vol. 2, no.
125, 20th October 1978, page 7467 E 78**

**JOURNAL OF THE AMERICAN CERAMIC
SOCIETY, vol. 35, no. 6, june 1952, pages
149-155, Columbus, Ohio, USA. H. R. LILLIE: "A
method for measuring the flow point of glass"**

(73) Proprietor: **N.V. Philips' Gloeilampenfabrieken
Groenewoudseweg 1
NL-5621 BA Eindhoven (NL)**

(72) Inventor: **Jochem, Cornelis Marinus Gerrit
c/o INT. OCTROOIBUREAU B.V. Prof. Holstlaan 6
NL-5656 AA Eindhoven (NL)**
Inventor: **Khoe, Giok Djan
c/o INT. OCTROOIBUREAU B.V. Prof. Holstlaan 6
NL-5656 AA Eindhoven (NL)**
Inventor: **Nicia, Antonius Josephus Adrianus
c/o INT. OCTROOIBUREAU B.V. Prof. Holstlaan 6
NL-5656 AA Eindhoven (NL)**

(74) Representative: **Hartung, Edgar Erwin et al
INTERNATIONAAL OCTROOIBUREAU B.V. Prof.
Holstlaan 6
NL-5656 AA Eindhoven (NL)**

## Description

The invention relates to a method of manufacturing a fibre-optical coupling element comprising at least two monomode fibres fused together over a given length and each comprising a fibre core of core glass and a fibre cladding of cladding glass, the cladding glass of which has a refractive index and a softening temperature lower than the refractive index and the softening temperature of the core glass, wherein the two fibres are positioned so that their parts to be fused are in contact with each other, are pressed against each other and are then heated at the parts to be fused in a manner such that the cladding glass softens, the spacing between the fibre cores thereby being reduced whilst the two fibres are fused together without softening the fibre cores, whereupon the fibres thus fused together are fixed to form a coupling element by cooling to room temperature.

Coupling elements thus manufactured are used in fibre-optical data transmission systems with one or more loops which are provided at different areas with such coupling elements to add or to split off a signal.

Normally, the fibre cladding of optical fibres is made of a cladding glass having a higher softening temperature than that of the core glass, because in the combinations most frequently used of glasses for fibre cladding and fibre core, the lower refractive index of the cladding glass required for optical fibres goes hand in hand with a higher softening temperature and the higher refractive index of the core glass involves a lower softening temperature. When two of these standard fibres are now fused together along their peripheries, besides the fusion of the fibre claddings, softening and deformation of the fibre cores occur, which results in an uncontrolled escape of light from one fibre core, which light is not collected by the other fibre core. The expression "deformation" is to be understand herein to mean an undesirable deformation of the original cross-section of the fibre core or an uncontrolled bendlike change of the form of the fibre core which is impermissible in connection with excessively large optical losses.

Deformation of the fibre core is prevented in a method known from the United States Patent Specification 3,902,786 according to which the fibres are freed from their claddings at their parts to be coupled, are positioned so that their bare cores contact each other and are coated again with a material, the refractive index of which is equal to that of the cladding material. This method is rather objectionable because bare fibre cores, especially of monomode fibres the fibre core of which has a diameter of the order of 5 to 9 µm, cannot be handled practically.

Deformation of the fibre cores is also prevented in another method known from the United States Patent Specification 4,054,366 by heating the fibre claddings locally, at the area at which this is required, by means of a laser beam. This method is particularly intended for fusing together fibres, the fibre core of which has a diameter of the order of 30 to 100 µm and the core glass having a softening temperature which is lower than that of the cladding glass.

In the method mentioned in the preamble and known from the British Patent Application 2030318, softening of the fibre cores is prevented by the use of fibres the cladding glass of which has not only a lower refractive index but also a lower softening temperature than the core glass. However, no further data about the softening temperature and the viscosity of core glass and cladding glass are stated in this Patent Specification.

The present invention has for its object to improve the known method and is therefore characterized in that fibres are chosen, the fibre core of which is made of a core glass the softening temperature of which is at least 80°C higher than the softening temperature of the cladding glass of which the fibre cladding is made, by softening temperature it is meant a temperature at which the glass has a viscosity of $10^{6.6}$ Pa.s, in that the fibres are positioned so that their claddings are in contact at a single area only, and in that the fibres are heated to a temperature lying between 520 and 560°C, at which the cladding glass has a viscosity between $10^{8.6}$ and $10^{6.7}$ Pa.s, whereas the core glass has a viscosity between $10^{10.5}$ and $10^{8.7}$ Pa.s, the fibres of the coupling element finally obtained being fused together over a finite length.

According to the prior art, it is difficult to manufacture fibre-optical coupling elements comprising two or more monomode fibres. Experiments have shown that with the use of the characteristic measures, fibre-optical coupling elements can be obtained in a reproducible manner and without deformation of the cross-section of the fibre core. Monomode fibres with the aforementioned parameters can be manufactured serially, for example, according to the double crucible method.

It should be noted that the softening temperature is defined as a temperature at which the glass has a viscosity of $10^{6.6}$ Pa.s.

A fibre-optical coupling element obtained by the method according to the invention is characterized by a regular appearance of the fused joint and by a non-deformed cross-section of the fibre cores.

The invention will be described more fully with reference to the drawing. In the drawing:

Figure 1 shows in side elevation two fibres to be coupled before fusion;

Figure 2 shows the fibres in cross-sectional view taken on the line II—II in Figure 1;

Figure 3 shows the two fibres fused together in side elevation;

Figure 4 shows the fibres fused in cross-sectional view taken on the line IV—IV in Figure 3;

Figure 5 shows two fibres in another position before fusion;

Figure 6 shows the two fibres shown in Figure 5 after fusion.

For the manufacture of a fibre-optical coupling element 1, two monomode fibres 3 are positioned so that their peripheries contact each other. Each fibre comprises a fibre core 7 and a fibre cladding 9.

2

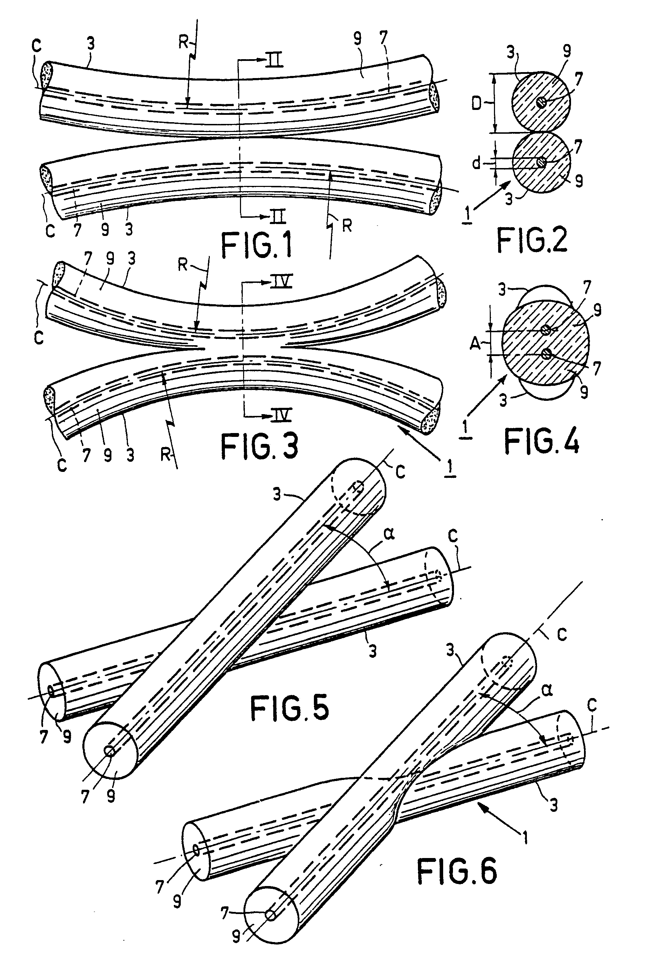

According to the embodiment shown in Figures 1 and 2, the fibres are positioned so that they contact each other and their centre lines C lie in one plane. As is generally required for optical fibres, the cladding glass of which the fibre claddings 9 are made has a lower refractive index than the core glass of the fibre cores 7. Moreover, however, the American softening temperature of the core glass is at least 80°C higher than the American softening temperature of the cladding glass.

When now the two fibres 3 are heated at the part to be fused, to a temperature at which the cladding glass softens already, whilst the core glass is still hard, and when the fibres are pressed against each other at the same time, cladding glass is displaced and the two fibre claddings are fused together at the heated part, the spacing between the two fibre cores being reduced to a distance "A" between their centre lines of the order of a few microns and the fibre cores being practically brought into contact with each other. By cooling to room temperature, the coupling element thus obtained is fixed in the fused and coupled state.

Figures 3 and 4 show in side elevation and in cross-section, respectively, the fibre-optical coupling element thus obtained with the fused fibre claddings 9 and the fibre cores 7, the original circular cross-section of which is not deformed. In order to ensure that the fibres are fused in a controlled and reproducible manner, the fusion process is distinctly limited to a given part of the fibres to be coupled and the fibres are fused together only over a finite length: in the embodiment shown, the fibres are slightly curved for this purpose, *i.e.* with a radius of curvature R.

Figure 5 and 6 show two fibres 3 before and after their fusion, respectively, the part to be fused of the fibres being limited by positioning the fibres with respect to each other so that their centre lines enclose an angle α, as a result of which also in this embodiment the fibres are fused together over a finite length.

By the method according to the invention, fibre-optical coupling elements were manufactured, in which monomode fibres having the following dimensions, parameters and compositions in mol.% were fused:

|  | core glass | cladding glass |
| --- | --- | --- |
| $SiO_2$ | 65.9 | 27.5 |
| $MgO$ | 12.5 | 12.5 |
| $Na_2O$ | 8.0 | 8.0 |
| $K_2O$ | 8.0 | 8.0 |
| $Li_2O$ | 4.0 | 4.0 |
| $Nb_2O_5$ | 1.6 | — |
| $B_2O_3$ | — | 40.0 |
| n | 1.5336 | 1.528 |
| $T_A$ (°C) | 658 | 563 |
| N 520°C (Pa.s) | $10^{10.5}$ | $10^{8.6}$ |
| N 560°C (Pa.s) | $10^{8.7}$ | $10^{6.7}$ |

$T_A$ is the American softening temperature, at which the viscosity is $10^{6.6}$ Pa.s;

n is the refractive index;

N is the viscosity of the glass in Pa.s;

The diameter D of the fibre cladding was 100 μm;

the diameter d of the fibre core was 5.5 μm.

By small variations of the $Nb_2O_5$ content of the core glass, refractive index differences can be achieved within given tolerances.

The degree or extent of coupling between the two fibres can be expressed by the coupling coefficient K. In the embodiment shown in Figures 3 and 4, the coupling coefficient K depends *inter alia* upon the radius of curvature R and upon the distance A between the centre lines of the fibre cores. In the manufacture of such coupling elements comprising two identical fibres of the said composition having the said diameters of fibre core and fibre cladding and a radius of curvature R of 0.93 m, the coupling coefficient K could be brought to a desired value between 0.0 and 0.9 by a suitable choice of the distance A between 2.0 and 3.5 μm.

In the embodiment shown in Figure 6, the coupling coefficient K depends *inter alia* upon the angle α and upon the distance A. In the manufacture of such coupling elements likewise comprising two identical fibres of the said composition and having the said diameters of fibre core and fibre cladding, the angle α having a value of 0.22°, the coupling coefficient could be varied between the values 0.0 and 0.9 also by variation of the distance A between 2.0 and 3.5 μm.

The invention has been described with reference to embodiments comprising two monomode fibres of the same composition and having the same dimensions. By the method according to the invention, it is also possible to compose coupling elements comprising more than two fibres having, as the case may be, the same dimensions.

### Claim

A method of manufacturing a fibre-optical coupling element comprising at least two monomode fibres fused together over a given length and each comprising a fibre core of core glass and a fibre cladding of cladding glass, the cladding glass of which has a refractive index and a softening temperature lower than the refractive index and the softening temperature of the core glass, wherein the two fibres are positioned so that their parts to be fused contact each other, are pressed against each other and are then heated at the parts to be fused in a manner such that the cladding glass softens, the spacing between the fibre cores thereby being reduced whilst the two fibres are fused together without softening of the fibre cores, whereupon the fibres thus fused are fixed to form a coupling element by cooling to room temperature, characterised in that fibres are chosen, the fibre core of which is made of a core glass the softening temperature of which is at least 80°C higher than the softening temperature of the cladding glass of which the fibre cladding is made, by softening temperature it is meant a temperature at which the glass has a viscosity of $10^{6.6}$ Pa.s, in that the fibres are positioned so that their claddings are in contact at a single area only, and in that the fibres are heated to a temperature lying between 520 and 560°C, at whch the cladding glass has a viscosity between $10^{8.6}$ and $10^{6.7}$ Pa.s, whereas the core glass has a viscosity between $10^{10.5}$ and $10^{8.7}$ Pa.s, the fibres of the coupling element finally obtained being fused together over a finite length.

### Patentanspruch

Verfahren zum Herstellen eines faseroptischen Kopplungselementes mit mindestens zwei über eine bestimmte Länge miteinander verschmolzenen Monomode-Fasern mit je einem Faserkern aus Kernglas und einem Fasermantel aus Mantelglas, wobei das Mantelglas eine Brechzahl und eine Erweichungstemperatur hat, die niedriger ist als die Brechzahl und Erweichungstemperatur des Kernglases, wobei die beiden Fasern derart angeordnet werden, dass die miteinander zu verschmelzenden Teile sich berühren, gegeneinder gedrückt werden und danach an den miteinander zu verschmelzenden Stellen derart erhitzt werden, dass das Mantelglas erweicht, wodurch der Abstand zwischen den Faserkernen verringert, während die zwei Fasern ohne Erweichung der Faserkerne miteinander verschmolzen werden, wonach die auf diese Weise miteinander verschmolzenen Fasern durch Abkühlung auf Raumtemperatur zu einem Kopplungselement fixiert werden, dadurch gekennzeichnet, dass Fasern gewählt werden, deren Faserkern aus einem Kernglas besteht, dessen Erweichungstemperatur um wenigstens 80°C höher liegt als die Erweichungstemperatur des Mantelglases, aus dem der Fasermantel besteht, wobei unter Erweichungstemperatur eine Temperatur verstanden wird, bei der das Glas eine Viskosität von $10^{6.6}$ Pa.s aufweist; dass die Fasern derart angeordnet werden, dass die Mäntel sich über nur einen einzigen Bereich berühren und dass die Fasern auf eine Temperatur erhitzt werden, die zwischen 520 und 560°C liegt, bei der das Mantelglas eine Viskosität zwischen $10^{8.6}$ und $10^{6.7}$ Pa.s aufweist, während das Kernglas eine Viskosität zwischen $10^{10.5}$ und $10^{8.7}$ Pa.s aufweist, wobei die Fasern des letzten Endes erhaltenen Kopplungselementes über eine bestimmte Länge miteinander verschmolzen sind.

### Revendication

Procédé de fabrication d'un élément de couplage à fibres optiques comportant au moins deux fibres monomodes réunies par fusion sur une longueur déterminée et comportant chacune un coeur en verre de coeur et une gaine en verre de gaine, le verre de gaine ayant un indice de réfraction et une température de ramollissement inférieurs à l'indice de réfraction et à la température de ramollissement du verre de coeur, procédé suivant lequel on positionne les deux fibres de façon que leurs parties à réunir par fusion soient en contact l'une avec l'autre, on les presse l'une contre l'autre et on les chauffe ensuite à l'endroit des parties à réunir par fusion de façon que le verre de gaine se ramollisse, la distance entre les coeurs de fibre étant diminuée, alors que les deux fibres sont réunies par fusion sans ramollissement des coeurs de fibre, après quoi, par rafroidissement jusqu'à la température ambiante, on fixe les fibres ainsi réunies par fusion de façon à former un élément de couplage, caractérisé en ce qu'on choisit des fibres dont le coeur est en verre

# 0 093 460

de coeur qui a sa température de ramollissement d'au moins 80°C supérieure à la température de ramollissement du verre de gaine constituant le matériau de la gaine de fibre, étant entendu que la température de ramollissement est une température à laquelle le verre a une viscosité de $10^{6,6}$ Pa.s, en ce qu'on positionne les fibres de façon que leurs gaines ne soient en contact qu'à un seul endroit, et en ce qu'on chauffe les fibres à une température comprise entre 520 et 560°C, température à laquelle le verre de gaine a sa viscosité comprise entre $10^{8,6}$ et $10^{6,7}$ Pa.s, alors que le verre de coeur a sa viscosité comprise entre $10^{10,5}$ et $10^{8,7}$ Pa.s, les fibres de l'élément de couplage finalement obtenu étant réunies par fusion sur une longueur finie.

FIG.1

FIG.2

FIG.3

FIG.4

FIG.5

FIG.6